# EUROPÄISCHE PATENTSCHRIFT

(11) **EP 2 368 021 B1**
(45) Veröffentlichungstag und Bekanntmachung des Hinweises auf die Patenterteilung: **13.01.2016**
(21) Anmeldenummer: 09748328.3
(22) Anmeldetag: 05.11.2009
(51) Int. Cl.: F01K 23/10

(54) **ABHITZEDAMPFERZEUGER SOWIE EIN VERFAHREN ZUM VERBESSERTEN BETRIEB EINES ABHITZEDAMPFERZEUGERS**
WASTE HEAT STEAM GENERATOR AND METHOD FOR IMPROVED OPERATION OF A WASTE HEAT STEAM GENERATOR
GÉNÉRATEUR DE VAPEUR À RÉCUPÉRATION DE CHALEUR ET PROCÉDÉ POUR AMÉLIORER LE FONCTIONNEMENT D'UN GÉNÉRATEUR DE VAPEUR À RÉCUPÉRATION DE CHALEUR

(30) Priorität: 19.12.2008 EP 08172255
(43) Veröffentlichungstag der Anmeldung: 28.09.2011
(73) Patentinhaber: Siemens Aktiengesellschaft, 80333 München (DE)
(72) Erfinder: SCHMID, Erich, 91080 Marloffstein (DE); STIERSTORFER, Helmut, 91054 Erlangen (DE)
(86) Internationale Anmeldenummer: PCT/EP2009/064663
(87) Internationale Veröffentlichungsnummer: WO 2010/069671

(56) Entgegenhaltungen:
- EP-A2- 0 487 244
- EP-A2- 0 899 505
- WO-A2-2006/050714
- US-A1- 2001 023 577

## Beschreibung

Die Erfindung betrifft einen Abhitzedampferzeuger, insbesondere in einer Gas- und Dampfturbinenanlage, und bezieht sich auf die Wärmenutzung bei höchsten Abgastemperaturen. Die Erfindung betrifft ferner ein Verfahren zum Betrieb eines Abhitzedampferzeugers.

In einer Dampfturbinenanlage mit einer Dampfturbine und einer Verbrennungskraftmaschine kann Wärme aus heißen Abgasen der Verbrennungskraftmaschine zum Betrieb der Dampfturbinenanlage genutzt werden. Ist die Verbrennungskraftmaschine eine Gasturbine, die zusammen mit der Dampfturbinenanlage dementsprechend eine GuD-Anlage (Gas- und Dampfturbinenanlage) bildet, wird verdichtete Luft mit einem gasförmigen oder flüssigen Brennstoff, beispielsweise Erdgas oder Erdöl, vermischt und verbrannt und die unter Druck stehenden Abgase werden im Turbinenteil der Gasturbine unter Verrichtung von Arbeit entspannt. Das aus der Gasturbine austretende, entspannte heiße Abgas weist typischerweise noch eine Temperatur von 550°C bis 650°C auf. Zur Nutzung der in dieser Wärme enthaltenen Energie wird das Abgas einem der Gasturbinenanlage abgasseitig nachgeschalteten Abhitzedampferzeuger zugeführt, in dem Heizflächen in Form von Rohren oder Rohrbündeln angeordnet sind. Die Heizflächen sind wiederum in einen Wasser-Dampf-Kreislauf der Dampfturbinenanlage geschaltet, welcher mindestens eine, zumeist jedoch mehrere Druckstufen aufweist. Die Druckstufen unterscheiden sich dadurch voneinander, dass in den Heizflächen bei der Dampferzeugung verschiedene Druckniveaus herrschen.

Üblicherweise umfasst der Strömungsmittelkreislauf mehrere, beispielsweise drei, Druckstufen mit jeweils einem eigenen Verdampferabschnitt. Dabei umfasst ein Verdampferabschnitt einen Speisewasservorwärmer (Economiser), einen Verdampfer und einen Überhitzer. Aufgrund der begrenzten thermischen Belastbarkeit der üblicherweise verwendeten Rohrwandwerkstoffe ist sicherzustellen, dass beim Betrieb einer Gas- und Dampfturbinenanlage eine obere Temperaturgrenze für die mit heißem Abgas beaufschlagten Komponenten im Abhitzedampferzeuger nicht überschritten wird. Dies betrifft insbesondere den Hochdruck- und Zwischenüberhitzer, der am Abgaseingang, also im heißesten Bereich des Abhitzedampferzeugers angeordnet ist.

Insbesondere bei Teillastbetrieb steigt die Gasturbinen-Abgastemperatur bis zum sogenannten Leitschaufel-Eckpunkt an. Unterhalb dieses LSV-Eckpunkts sinkt die Abgastemperatur, allerdings ist dies auch mit erhöhten Emissionen verbunden. Die höchsten Abgastemperaturen (>600°C bei hohen Umgebungstemperaturen oder bei Fahrweise mit Gasturbinen-Ansaugluftvorwärmung) treten deshalb auch beim Anfahren der Gasturbine auf, solange die Dampfturbine noch nicht gestartet wurde oder bei GuD-Betrieb im Schwachlastbereich (ca. 50% Leistung).

Neben der thermischen Belastung der Hochdrucküberhitzerflächen ist beim Betrieb einer Gas- und Dampfturbinenanlage, insbesondere beim Hochfahren derselben, auch die Anstoßtemperatur der Dampfturbine bei Kalt- oder Warmstart zu beachten, die gegenüber den hohen Gasturbinen-Abgastemperaturen mit 350-400°C verhältnismäßig niedrig liegt.

Ist der Startvorgang beendet und die Dampfturbine auf Betriebstemperatur soll die Dampftemperatur jedoch nicht nur nach oben begrenzt sein. Im Hinblick auf eine Verbesserung des Anlagenwirkungsgrades wird die maximale Dampftemperatur im Bereich der Temperatureinsatzgrenze des eingesetzten Martensit-Stahls gewählt. Daraus folgt, dass die Temperatur relativ exakt (Minutenbereich) geregelt werden muss.

In konventionellen Dampfkraftwerken (befeuerte und Abhitzedampferzeuger) werden zur Dampftemperaturregelung und zum Schutz temperaturempfindlicher Bauteile an verschiedenen Stellen der Dampfleitungen Einspritzkühler verwendet, bei denen durch Einspritzen von kühlem Speisewasser in eine Dampfleitung die Temperatur des die Rohrleitung durchströmenden Dampfes gesenkt wird und somit auch die Temperatur der von diesem gekühlten Dampf durchströmten Komponenten.

Das Konzept mit Zwischen- und Endeinspritzkühlern stößt aber mit maximalen Einspritzraten von 15 bis 20% an technische Grenzen und verringert zudem den Anlagenwirkungsgrad beim Anfahren und im Leistungsbetrieb.

Darüber hinaus werden Einspritzkühler in der Frischdampf/Zwischenüberhitzungs-Dampfleitung von manchen Betreibern und Dampfturbinen-Herstellern nicht akzeptiert bzw. ungern geduldet, da ein Risiko, dass Wassertröpfchen in die Dampfturbine gelangen könnten, gesehen wird. Außerdem können Temperaturschockprobleme wegen der hohen Temperaturunterschiede zwischen Einspritzwasser und Dampftemperatur auftreten, wenn der Endeinspritzkühler zum Einsatz kommt, d.h. das kühlere Wasser durch die auf Dampftemperatur aufgewärmte Einspritzdüse strömt.

Es besteht zwar die Möglichkeit der Verwendung eines zusätzlichen Einspritzkühlers, dies erfordert aber längere Mischstrecken und führt zu noch komplexeren Regelungen und dazu, dass der Abzweig zur Hochdruckumleitstation (HDU) weiter vom AHDE entfernt angeordnet werden muss.

Eine mögliche Lösung sieht die Lastabsenkung der Gasturbine bis zur Abgastemperaturreduzierung vor. Dieses führt allerdings zu einer Emissionserhöhung und kann daher eventuell eine Begrenzung der Startanzahl zur Folge haben, wenn die Emissionsgrenzen erreicht sind.

Auch eine Unterschreitung der Mindestdampfmenge für den Dampfturbinen-Start bei großen Dampfturbinen mit zwei oder drei zugeordneten Gasturbinen (2x1, 3x1) kann auftreten. Dies schränkt aber die gewünschte Betriebsflexibilität erheblich ein.

Schließlich wäre eine Materialauslegung der betroffenen Überhitzer- / Zwischenüberhitzer-Systembereiche für höchste Gasturbinen-Abgastemperatur möglich, es können dann aber evtl. Werkstoffprobleme bei neuen Gasturbinen-Entwicklungen auftreten, da beispielsweise der Einsatz von austenitischen Werkstoffen notwendig werden kann.

Das US Patent 7,174,715 B2 (Armitage et al, Feb. 13, 2007; "Hot to Cold Steam Transformer for Turbine Systems") zeigt einen weiteren Lösungsweg auf. Ein Dampfumformer wird dort verwendet, um die Dampftemperatur in einer Dampfturbine zu konditionieren, beispielsweise beim Turbinen-Kaltstart. Hierzu wird dem Dampfumformer Dampf und Wasser zugeführt. Durch den Kontakt mit Wasser kühlt sich der Dampf ab und verlässt den Dampfumformer durch einen Tropfenabscheider.

Ein gattungsmäßiger Nachteil dieser Anlage ist jedoch, dass zwar die Dampftemperatur eingestellt werden kann, aber das Problem der zu hohen Abgastemperatur am Überhitzer selbst nicht gelöst wird.

Die WO 2006/050714 offenbart Vorrichtungen zur Dampferzeugung für Kleinstkraftwerke, bei denen derjenige Abschnitt des Strömungskanals, nämlich der Verdampfungsabschnitt, der jeweiligen Wärmequelle am nächsten und damit an einer Stelle liegt, für den bei diesen Anwendungen die meiste Wärmeenergie benötigt wird bzw. wo von dem den Strömungskanal durchströmenden Arbeitsmedium die meiste Energie aufgenommen wird. Dagegen ist der Überhitzungsbereich, in dem der bereits trockene Dampf lediglich stärker erhitzt wird, weiter von der Wärmequelle entfernt.

Die EP 0 487 244 A und die EP 0 899 505 A2 offenbaren einen Abhitzedampferzeuger mit einem Zwischenüberhitzer, der im Bereich der höchsten Abgastemperaturen im Abhitzedampferzeuger angeordnet ist und somit in Strömungsrichtung eines Abgases dem Überhitzer vorgelagert ist.

Aufgabe der vorliegenden Erfindung ist daher die Angabe eines Abhitzedampferzeugers, bei dem auch bei höchsten Abgastemperaturen ein Material schonender Betrieb erreicht werden kann.

Erfindungsgemäß wird die auf einen Abhitzedampferzeuger gerichtete Aufgabe gelöst durch einen Abhitzedampferzeuger mit einem Abgaseingang, und einer zwischen dem Abgaseingang und einem in Strömungsrichtung des Abgases ersten Überhitzer angeordnete Heizfläche, wobei ein Abscheider der Heizfläche sekundärseitig nachgeschaltet ist.

Die Erfindung beruht demnach auf dem Gedanken, dem dem Abgaseingang nächstgelegenen, ersten Überhitzer eine Heizfläche vorzuschalten, die im Bedarfsfall dem heißen Abgas Wärme entzieht, bevor es zum Überhitzer gelangt, so dass eine zu hohe thermische Belastung des Überhitzers bzw. eine zu große Aufheizung des Dampfes im Überhitzer vermieden werden kann. Der Abscheider ist der Heizfläche sekundärseitig nachgeschaltet, um Wassereintrag in die Frischdampfleitung im Störungsfall oder bei dynamischen Druckänderungen zu vermeiden.

Vorteilhafter Weise ist die Heizfläche sekundärseitig ausgangsseitig mit einer Dampfleitung zu einem Hochdruckteil einer Dampfturbine (Frischdampfleitung) verbunden.

Vorteilhafter Weise ist der Abscheider ein Massenkraft-Abscheider mit Abscheideflasche. Die beste Abscheidung unter den Massenkraftabscheidern wird durch Fliehkraftabscheider erzielt. In Fliehkraftabscheidern, manchmal auch Zyklonabscheider genannt, wird der Dampf im Gegensatz zur Zentrifuge durch seine eigene Strömungsgeschwindigkeit und entsprechende konstruktive Gestaltung des Abscheiders in eine Drehbewegung versetzt (beispielsweise durch tangentiales Einströmen in einen Zylinder). Die auf die Wassertröpfchen wirkenden Zentrifugalkräfte beschleunigen diese radial nach außen, wodurch sie vom Dampfstrom getrennt werden. Der Dampfstrom selbst wird nach innen geleitet und abgeführt.

In einer vorteilhaften Ausführungsform ist die Heizfläche sekundärseitig mit Wasser bespeisbar, vorzugsweise mit heißem, leicht unterkühltem Wasser, beispielsweise aus einem Speisewasservorwärmer, und insbesondere aus einem Hochdruck-Speisewasservorwärmer.

Vorteilhafter Weise ist die Heizfläche eine Zwangdurchlauf-Verdampfer-Heizfläche. Hierbei lässt sich die gewünschte Menge des Durchlaufs des Wasser-/Dampfstromes zur gezielten Einstellung der gewünschten Kühlwirkung mittels einer Speisepumpe erzwingen.

In einer alternativen Ausführungsform ist die Heizfläche sekundärseitig eingangsseitig mit einem Hochdruck-Vorüberhitzer verbunden, so dass die Heizfläche vorteilhafter Weise auch als Hochdruck-Überhitzer genutzt werden kann, indem die Bespeisung mit Hochdruck-Speisewasser abgeschaltet und Hochdruck-Dampf vom Hochdruck-Vorüberhitzer aufgeschaltet wird.

Dies ist prinzipiell auch mit Zwischenüberhitzungs-Dampf denkbar, so dass in einer weiteren vorteilhaften Ausführungsform ist die Heizfläche sekundärseitig eingangsseitig mit einem Zwischenüberhitzer verbunden ist.

Vorteilhafter Weise ist der erste Überhitzer ein Hochdruck-Überhitzer. In einer vorteilhaften Alternative ist der erste Überhitzer ein Zwischenüberhitzer.

Es ist zweckmäßig, wenn der Abhitzedampferzeuger einen Hochdruck-Bypass zur Umführung des Überhitzers umfasst.

Es ist weiterhin zweckmäßig, wenn der Abhitzedampferzeuger einen Zwischenüberhitzer-Bypass zur Umführung eines Zwischenüberhitzers umfasst.

Beide, Hochdruck-Bypass und Zwischenüberhitzer-Bypass, können nämlich in vorteilhafter Weise zur Feinregelung der Dampftemperatur verwendet werden, indem Hochdruck- beziehungsweise Zwischenüberhitzungs-Dampf am Hochdruck-Überhitzer beziehungsweise Zwischenüberhitzer vorbei geführt und dem Frischdampf / Zwischenüberhitzungs-Dampf zugemischt werden. Alternativ könnte diese Feinregelung auch ein Einspritzkühler übernehmen.

In einer vorteilhaften Ausführungsform ist ein Eintrittssammler für die Heizfläche ein Rohr-in-Rohr-Eintrittssammler.

Es ist vorteilhaft, wenn ein GuD-Kraftwerk, umfassend eine Gasturbine und eine Dampfturbine, weiterhin einen erfinderischen Abhitzedampferzeuger umfasst.

Im erfinderischen Verfahren zum Betrieb eines Abhitzedampferzeugers, umfassend einen in Strömungsrichtung des Abgases ersten Überhitzer, wird ein heißes Abgas, bevor es auf den ersten Überhitzer trifft, gekühlt und nicht verdampftes Wasser wird in einem Zyklon-Abscheider mit Abscheideflasche beim Kühlen des Abgases abgeschieden.

Dabei ist es vorteilhaft, wenn das Abgas mit heißem Hochdruck-Speisewasser gekühlt wird. Zweckmäßigerweise ist die Kühlungsleistung regelbar.

Es kann aber auch vorteilhaft sein, wenn das Abgas mit Vorüberhitzer-Dampf gekühlt wird.

Es ist zweckmäßig, wenn der bei der Kühlung des Abgases entstehende Dampf mit Hochdruck-Dampf gemischt wird.

Beim Anfahren des Abhitzedampferzeugers wird die als Zwangdurchlauf-Verdampfer-Heizfläche (sog. Benson-Prinzip) betriebene teilgefüllte Heizfläche vom Gasturbinenabgas erwärmt und das Wasser beginnt zu verdampfen (Wasserausstoß in Zyklon mit Abscheideflasche). Aus dem Hochdruck-Speisewasser-Vorwärmer wird Wasser nachgespeist und die Zwangdurchlauf-Verdampfer-Heizfläche wird zunächst als Naturumlaufverdampfer betrieben, bevor sie gezielt mittels Nachspeiseregelung temperaturgeregelt wird (je nach Zielsollwert zum Beispiel 350°C).

Durch eine Überhitzerumführung (Hochdruck-Dampf-Bypass) wird nach Starten des Hochdruck-Verdampfers die zum Start der Dampfturbine erforderliche Frischdampftemperatur eingestellt. Nach dem Dampfturbinenstart wird der Dampftemperatursollwert erhöht und die Nachspeisung von Hochdruck-Speisewasservorwärmer-Wasser in die Zwangdurchlauf-Verdampfer-Heizfläche verringert. Der Hochdruck-Dampf-Bypass übernimmt die Feinregelung der Dampftemperatur.
Nun ist lediglich noch eine minimale Bespeisung zur Kühlung der Zwangdurchlauf-Verdampfer-Heizfläche notwendig, die Austrittstemperatur erreicht dabei den Nennsollwert.
Ist die Gasturbinen-Abgastemperatur entsprechend niedrig (zum Beispiel kalte Umgebungstemperaturen, keine Gasturbinen-Ansaugluftvorwärmung), kann die Bespeisung auch abgeschaltet und die Heizfläche mit Dampf aus dem Hochdruck-Vorüberhitzer beaufschlagt werden, um die Hochdruck-Überhitzer-Temperatur anzuheben (Wirkungsgradoptimierung).

Im Teillastbetrieb des Abhitzedampferzeugers wird zwischen zwei Fällen unterschieden: Bei hohen Umgebungstemperaturen wird die Zwangdurchlauf-Verdampfer-Heizfläche mit Mindestbespeisung gefahren und auf maximale Nenntemperatur geregelt. Bei niedrigen Umgebungstemperaturen kann die Bespeisung abgeschaltet werden und die Heizfläche wird als Hochdruck-Überhitzer umfunktioniert.

Bei Rückschaltung auf Bespeisung mit Hochdruck-Speisewasservorwärmer-Wasser sorgen Rohr-in-Rohr-Eintrittssammler für eine funktionsgerechte Mischung von Dampf- und Speisewasservorwärmer-Wasser und damit für eine schonende Abkühlung der Eintrittssammler auf Speisewasservorwärmer-Temperatur.

Auch beim Abfahren des Abhitzedampferzeugers hängt der Betrieb der Heizfläche von der Umgebungstemperatur beziehungsweise der Gasturbinen-Abgastemperatur ab. Unterschreitet die Gasturbinen-Abgastemperatur einen gewissen Wert (z.B. 550°C), wird die Bespeisung der Zwangdurchlauf-Verdampfer-Heizfläche abgestellt.

Durch die temperaturgeregelte Zwangdurchlauf-Verdampfer-Heizfläche können die Probleme, die Zwischen- und Endeinspritzkühler und mit sich bringen, wie Tröpfchenrisiko und Temperaturschock, in einfacher Weise gelöst werden.

Der Anlagenwirkungsgrad wird erhöht, da sowohl beim Anfahren als auch bei Teillastbetrieb heißes Hochdruck-Speisewasservorwärmer-Austrittswasser verwendet werden kann, wodurch die Dampfproduktion maximiert wird.

Die Dampftemperatur (Hochdruck/Zwischenüberhitzung) kann auch bei veränderter Gasturbinen-Abgastemperatur gegenüber der Auslegung flexibel eingestellt und geregelt werden. Zudem kann die Materialtemperatur der heißliegenden Heizflächen und Sammler begrenzt werden.
Durch den großen Temperaturregelbereich ist eine Feineinstellung über den gesamten Bereich möglich (für Hochdruck- und Zwischenüberhitzer-Temperaturen).

Weiterhin kann die Überhitzer/Zwischenüberhitzer-Konstruktion vereinfacht werden, da keine Zwischeneinspritzung mehr notwendig ist (Zwischensammler mit Einspritzstrecken etc.).

Die Zwangdurchlauf-Verdampfer-Heizfläche ist für Trommel- und Bensondampferzeugerbauart anwendbar. Außerdem ist sie für die Standardisierung vorteilhaft und wird zum Beispiel auch auf dem US-Markt akzeptiert.

Die Erfindung wird beispielhaft anhand der Zeichnungen näher erläutert. Es zeigen schematisch und nicht maßstäblich:
Figur 1 eine GuD-Anlage mit einem bekannten Abhitzedampferzeuger,
Figur 2 eine GuD-Anlage mit einem weiteren bekannten Abhitzedampferzeuger,
Figur 3 einen Abhitzedampferzeuger gemäß der Erfindung,
Figur 4 eine alternative Schaltung des Abhitzedampferzeugers gemäß der Erfindung und
Figur 5 einen Rohr-in-Rohr-Eintrittssammler.

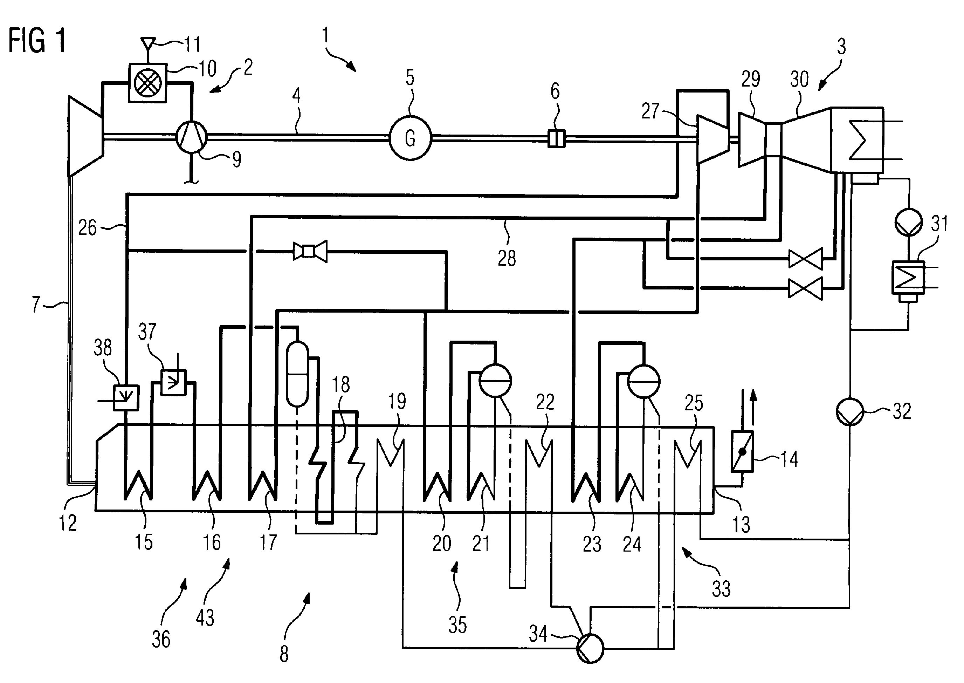

Die Figur 1 zeigt schematisch und beispielhaft eine Dampfturbinenanlage, die als Gas- und Dampfturbinenanlage 1 ausgeführt ist, und die als Verbrennungskraftmaschine eine Gasturbine 2 umfasst sowie eine Dampfturbine 3. Über eine Welle 4 sind ein Läufer der Gasturbine 2, ein Läufer eines Generators 5 und ein Läufer der Dampfturbine 3 miteinander gekoppelt, wobei der Läufer der Dampfturbine 3 und der Läufer des Generators 5 über eine Kupplung 6 rotatorisch voneinander trennbar und koppelbar sind. Die Läufer des Generators 5 und der Gasturbine 2 sind über die Welle 4 starr miteinander verbunden. Ein Abgasauslass der Gasturbine 2 ist über eine Abgasleitung 7 mit einem Abhitzedampferzeuger 8 verbunden, die zur Erzeugung des Betriebsdampfs der Dampfturbine 3 aus Abwärme der Gasturbine 2 vorgesehen ist.

Während eines Betriebs der Gas- und Dampfturbinenanlage 1 wird vom rotierenden Läufer der Gasturbine 2 über die Welle 4 ein Verdichter 9 angetrieben, der Verbrennungsluft aus der Umgebung ansaugt und einer Brennkammer 10 zuführt. Dort wird die Verbrennungsluft mit von einer Brennstoffzuführung 11 herangeführtem Brennstoff vermischt und verbrannt und die heißen, unter Druck stehenden Abgase werden der Gasturbine 2 zugeführt und dort unter Leistung von Arbeit entspannt. Die noch etwa 550 bis 650°C heißen Abgase werden anschließend durch die Abgasleitung 7 dem Abhitzedampferzeuger 8 zugeführt und durchströmen diesen vom Abgaseingang 12 bis zum Abgasausgang 13, und gelangen durch einen Kamin 14 in die Umgebung. Auf ihrem Weg durch den Abhitzedampferzeuger 8 führen sie ihre Wärme einem Hochdruck-Überhitzer 15 zu, dann einem Hochdruck-Vorüberhitzer 16, einem Zwischenüberhitzer 17, einem Hochdruck-Verdampfer 18, einem Hochdruck-Vorwärmer 19, dann einen Mitteldruck-Überhitzer 20, einem Mitteldruck-Verdampfer 21, einem Mitteldruck-Vorwärmer 22, dann einem Niederdruck-Überhitzer 23, einem Niederdruck-Verdampfer 24 und schließlich einem Kondensatvorwärmer 25.

Im Hochdruck-Überhitzer 15 überhitzter Dampf wird durch eine Dampfableitung 26 einer Hochdruckstufe 27 der Dampfturbine 3 zugeführt und dort unter Leistung von Arbeit entspannt. Mit der Arbeit wird - analog zur in der Gasturbine 2 geleisteten Arbeit - die Welle 4 und damit der Generator 5 zur Erzeugung elektrischer Energie bewegt. Der in der Hochdruckstufe 27 teilweise entspannte heiße Dampf wird anschließend dem Zwischenüberhitzer 17 zugeführt, dort erneut erhitzt und über eine Ableitung 28 einer Mitteldruckstufe 29 der Dampfturbine 3 zugeführt und dort unter Leistung von mechanischer Arbeit entspannt. Der dort teilweise entspannte Dampf wird über eine interne Zuleitung einer Niederdruckstufe 30 der Dampfturbine 3 zugeführt und dort unter Abgabe von mechanischer Energie weiter entspannt.

Der entspannte Dampf wird im Kondensator 31 der Dampfturbine 3 kondensiert, und das so entstehende Kondensat wird über eine Kondensatpumpe 32 nach Erwärmung im Kondensatvorwärmer 25 direkt einer Niederdruckstufe 33 des Abhitzedampferzeugers 8 oder über eine Speisewasserpumpe 34 - und von dieser mit entsprechendem Druck versehen - einer Mitteldruckstufe 35 oder einer Hochdruckstufe 36 des Abhitzedampferzeugers 8 zugeführt, wo das Kondensat verdampft wird. Nach einer Dampferzeugung und Überhitzung wird der Dampf über die entsprechenden Ableitungen des Abhitzedampferzeugers 8 wieder der Dampfturbine 3 zur Entspannung und Verrichtung mechanischer Arbeit zugeführt.

Figur 1 zeigt ferner einen zwischen Hochdruck-Vorüberhitzer 16 und Hochdruck-Überhitzer 15 geschalteten Zwischeneinspritzkühler 37 und einen in Strömungsrichtung des Dampfes hinter den Hochdruck-Überhitzer 15 geschalteten Endeinspritzkühler 38 zur Regelung der Dampftemperatur.

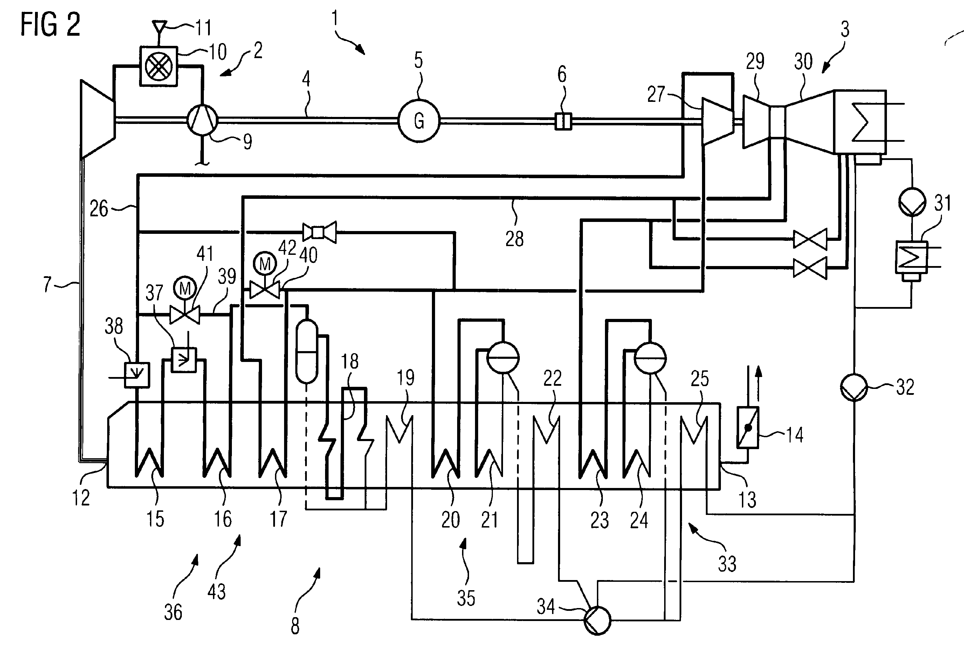

Figur 2 zeigt schematisch eine GuD-Anlage 1, die sich von der in Figur 1 gezeigten Anlage durch Dampf-Bypässe unterscheidet, und zwar den Hochdruck-Dampf-Bypass 39 der den Hochdruck-Überhitzer 15 umführt beziehungsweise den Zwischenüberhitzer-Dampf-Bypass 40, der den Zwischenüberhitzer umführt. Über die Regelung der Ventile 41,42, die diesen Bypässen 39,40 zugeordnet sind, lässt sich ebenfalls die Dampftemperatur im Hochdruckteil 36 und im Zwischenüberhitzerteil 43 einstellen.

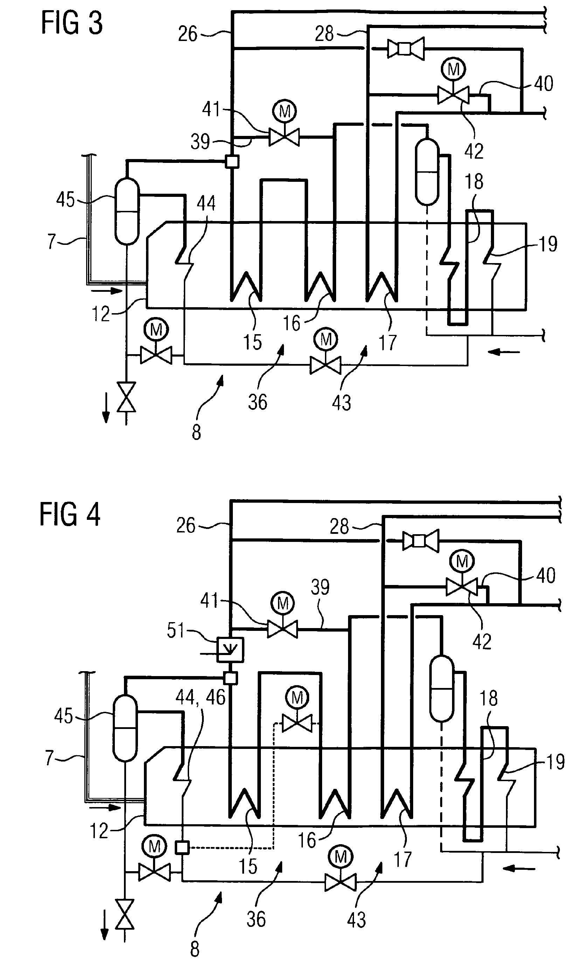

Figur 3 zeigt schematisch den erfinderischen Abhitzedampferzeuger 8 mit einer zusätzlichen Heizfläche 44 zwischen dem Abgaseingang 12 des Abhitzedampferzeugers 8 und dem Hochdruck-Überhitzer 15. Die Heizfläche 44 wird mit Speisewasser aus dem Hochdruck-Speisewasservorwärmer 19 versorgt. Ein Zyklon-Abscheider 45 mit Abscheideflasche ist am Dampfaustritt dieser Heizfläche 44 vorgesehen, um Wassereintrag in die Frischdampfleitung 26, mit der der Ausgang des Abscheiders 45 verbunden ist, im Störungsfall oder bei dynamischen Druckänderungen zu vermeiden.

Figur 4 zeigt eine alternative Anwendung der Erfindung, bei der die Heizfläche 44 als Hochdruck-Überhitzer genutzt wird, indem die Bespeisung aus dem Hochdruck-Speisewasservorwärmungs-Austritt abgeschaltet und Hochdruck-Dampf vom Hochdruck-Vorüberhitzer 16 aufgeschaltet wird. Dies ist prinzipiell auch mit Zwischenüberhitzungs-Dampf denkbar.

Zur Feinregelung der Dampftemperatur wird der Hochdruck- und Zwischenüberhitzungs-Dampf an Hochdruck-Überhitzer 15 und Zwischenüberhitzer 17 vorbeigeführt (Überhitzungs- beziehungsweise Zwischenüberhitzungs-Dampfbypass) und dem Frischdampf/Zwischenüberhitzungsdampf zugemischt. Alternativ oder zusätzlich kann diese Feinregelung auch ein Einspritzkühler 51 übernehmen.

In den Figuren 3 und 4 ist zwar nur ein einziges Rohr der Heizfläche 44 dargestellt. Tatsächlich sind eine Vielzahl solcher gleich ausgebildeter Rohre senkrecht zur Zeichenebene im Abhitzedampferzeuger 8 nebeneinander angeordnet und sowohl an einem Eintrittssammler, als auch an einem Austrittssammler angeschlossen. Diese Rohrbündel können ein- oder mehrlagig ausgeführt werden je nach erforderlicher Wärmeübertragungsleistung.

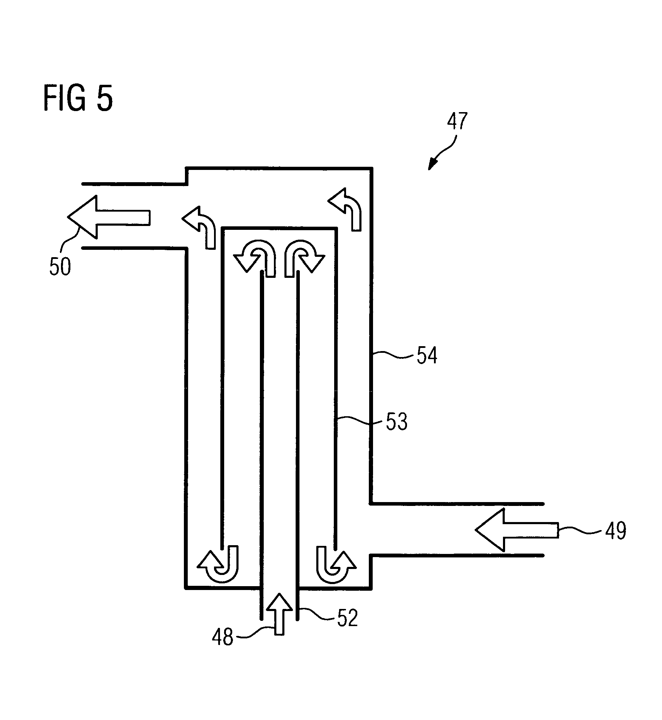

Figur 5 zeigt einen Eintrittssammler 47 der besonders ausgestaltet ist, um bei Rückschaltung der Bespeisung 50 der Heizfläche 44 von Dampf 49 vom Hochdruck-Vorüberhitzer 16 auf Hochdruck-Speisewasservorwärmer-Wasser 48 eine schonende Abkühlung des Eintrittssammlers 47 auf Speisewasservorwärmer-Temperatur durch funktionsgerechte Mischung von Dampf und Speisewasservorwärmer-Wasser zu gewährleisten. Hierzu ist der Eintrittssammler 47 gemäß dem Rohr-in-Rohr-System mit konzentrischen Wärmetauscherelementen aufgebaut (vgl. DE 37 41 882 C1, GEA Luftkühlergesellschaft Happel GmbH & Co; DOLEZAL RICHARD; 02. Februar 1989). Speisewasser wird im Zentralrohr 52 nach oben gepumpt, wird umgelenkt und strömt zwischen Zentralrohr 52 und einem zweiten Rohr 53, das das Zentralrohr 52 umgibt, wieder nach unten, wird wieder umgelenkt und strömt zwischen dem zweiten Rohr 53 und einem dritten Rohr 54, das das zweite Rohr 53 umgibt, wieder nach oben und wird der Heizfläche 44 zuführt. Über die Flächen des zweiten Rohres 53 und des Zentralrohres 52 erfolgt ein Wärmetausch mit dem einströmenden Speisewasser, so dass das Speisewasser vom Eintritt in den Sammler 47 bis zum Austritt stetig erwärmt und zuerst verdampft wird. Dieser relativ kalte Dampf kühlt die Rohre 53 und 54 mehr und mehr ab bis dann das nachfolgende Speisewasser die Rohrwandtemperatur auf Speisewassertemperatur absenkt.

## Patentansprüche

1. Ein Abhitzedampferzeuger (8) mit einem Abgaseingang (12) und einer zwischen dem Abgaseingang (12) und einem in Strömungsrichtung des Abgases ersten Überhitzer (15,17) angeordneten Heizfläche (44), **dadurch gekennzeichnet, dass** ein Abscheider (45) der Heizfläche (44) sekundärseitig nachgeschaltet ist.

2. Der Abhitzedampferzeuger (8) nach Anspruch 1, wobei die Heizfläche (44) sekundärseitig ausgangsseitig mit einer Dampfleitung (26) zu einem Hochdruckteil (27) einer Dampfturbine (3) verbunden ist.

3. Der Abhitzedampferzeuger (8) nach Anspruch 1 oder 2, wobei der Abscheider (45) ein Massenkraft-Abscheider ist.

4. Der Abhitzedampferzeuger (8) nach einem der vorhergehenden Ansprüche, wobei die Heizfläche (44) sekundärseitig mit Wasser bespeisbar ist.

5. Der Abhitzedampferzeuger (8) nach einem der vorhergehenden Ansprüche, wobei die Heizfläche (44) sekundärseitig mit Wasser aus einem Speisewasservorwärmer bespeisbar ist.

6. Der Abhitzedampferzeuger (8) nach Anspruch 5, wobei der Speisewasservorwärmer ein Hochdruck-Speisewasservorwärmer (19) ist.

7. Der Abhitzedampferzeuger (8) nach einem der vorhergehenden Ansprüche, wobei die Heizfläche (44) eine Zwangdurchlauf-Verdampfer-Heizfläche ist.

8. Der Abhitzedampferzeuger (8) nach einem der Ansprüche 1 bis 3, wobei die Heizfläche sekundärseitig eingangseitig mit einem Hochdruck-Vorüberhitzer (16) verbunden ist.

9. Der Abhitzedampferzeuger (8) nach einem der Ansprüche 1 bis 3, wobei die Heizfläche sekundärseitig eingangseitig mit einem Zwischenüberhitzer (17) verbunden ist.

10. Der Abhitzedampferzeuger (8) nach einem der vorhergehenden Ansprüche, wobei der erste Überhitzer ein Hochdruck-Überhitzer (15) ist.

11. Der Abhitzedampferzeuger (8) nach einem der vorhergehenden Ansprüche, weiter umfassend einen Hochdruck-Dampf-Bypass (39) zur Umführung des Hochdruck-Überhitzers (15).

12. Der Abhitzedampferzeuger (8) nach einem der vorhergehenden Ansprüche, weiter umfassend einen Zwischenüberhitzer-Dampf-Bypass (40) zur Umführung eines Zwischenüberhitzers (17).

13. Der Abhitzedampferzeuger (8) nach einem der vorhergehenden Ansprüche, wobei ein Eintrittssammler (47) für die Heizfläche (44) ein Rohr-in-Rohr-Eintrittssammler ist.

14. Eine GuD-Anlage (1), umfassend eine Gasturbine (2), eine Dampfturbine (3) und einen Abhitzedampferzeuger (8) nach einem der vorhergehenden Ansprüche.

15. Ein Verfahren zum Betrieb eines Abhitzedampferzeugers (8) umfassend einen in Strömungsrichtung des Abgases ersten Überhitzer (15,17), wobei ein heißes Abgas, bevor es auf den ersten Überhitzer (15) trifft, gekühlt wird, **dadurch gekennzeichnet, dass** in einem Zyklon-Abscheider mit Abscheideflasche beim Kühlen des Abgases nicht verdampftes Wasser abgeschieden wird.

16. Das Verfahren nach Anspruch 15, wobei das Abgas mit heißem Hochdruck-Speisewasser gekühlt wird.

17. Das Verfahren nach Anspruch 15, wobei das Abgas mit Vorüberhitzer-Dampf gekühlt wird.

18. Das Verfahren nach einem der Ansprüche 15 bis 17, wobei der bei der Kühlung des Abgases entstehende Dampf mit Hochdruck-Dampf gemischt wird.

## Claims

1. Heat recovery steam generator (8) having an exhaust gas inlet (12) and a heating surface (44) disposed between the exhaust gas inlet (12) and a first superheater (15,17) positioned in the flow direction of the exhaust gas, **characterised in that** a separator (45) is connected downstream of the heating surface (44) on the secondary side.

2. Heat recovery steam generator (8) according to claim 1, wherein the heating surface (44) is connected on the secondary side at the outlet side to a steam line (26) leading to a high-pressure stage (27) of a steam turbine (3).

3. Heat recovery steam generator (8) according to claim 1 or 2, wherein the separator (45) is an inertial separator.

4. Heat recovery steam generator (8) according to one of the preceding claims, wherein water may be fed to the secondary side of the heating surface (44).

5. Heat recovery steam generator (8) according to one of the preceding claims, wherein water from an economiser may be fed to the secondary side of the heating surface (44).

6. Heat recovery steam generator (8) according to claim 5, wherein the economiser is a high-pressure economiser (19).

7. Heat recovery steam generator (8) according to one of the preceding claims, wherein the heating surface (44) is a once-through evaporator heating surface.

8. Heat recovery steam generator (8) according to one of claims 1 to 3, wherein the heating surface is connected on the secondary side at the inlet side to a high-pressure pre-superheater (16).

9. Heat recovery steam generator (8) according to one of claims 1 to 3, wherein the heating surface is connected on the secondary side at the inlet side to an intermediate superheater (17).

10. Heat recovery steam generator (8) according to one of the preceding claims, wherein the first superheater is a high-pressure superheater (15).

11. Heat recovery steam generator (8) according to one of the preceding claims, further comprising a high-pressure steam bypass (39) for bypassing the high-pressure superheater (15).

12. Heat recovery steam generator (8) according to one of the preceding claims, further comprising an intermediate superheater steam bypass (40) for bypassing an intermediate superheater (17).

13. Heat recovery steam generator (8) according to one of the preceding claims, wherein an inlet header (47) for the heating surface (44) is a tube-in-tube inlet header.

14. Combined-cycle gas and steam turbine plant (1), comprising a gas turbine (2), a steam turbine (3) and a heat recovery steam generator (8) according to one of the preceding claims.

15. Method for operating a heat recovery steam generator (8) comprising a first superheater (15,17) positioned in the flow direction of the exhaust gas, wherein a hot exhaust gas is cooled before it reaches the first superheater (15), **characterised in that** water that has not evaporated during cooling of the exhaust gas is separated in a cyclone separator with separating flask.

16. Method according to claim 15, wherein the exhaust gas is cooled by means of hot high-pressure feedwater.

17. Method according to claim 15, wherein the exhaust gas is cooled by means of pre-superheater steam.

18. Method according to one of claims 15 to 17, wherein the steam produced during cooling of the exhaust gas is mixed with high-pressure steam.

## Revendications

1. Générateur ( 8 ) de vapeur à récupération de la chaleur perdue comprenant une entrée ( 12 ) des gaz perdus et une surface ( 44 ) de chauffe disposée entre l'entrée ( 12 ) pour les gaz perdus et un premier surchauffeur ( 15, 17 ) dans le sens d'écoulement des gaz perdus, **caractérisé en ce qu'**un séparateur ( 45 ) est monté en aval du côté secondaire de la surface ( 44 ) de chauffe.

2. Générateur ( 8 ) de vapeur à récupération de la chaleur perdue suivant la revendication 1, dans lequel la surface ( 44 ) de chauffe communique du côté secondaire, du côté de la sortie, par un conduit ( 26 ) pour de la vapeur, avec une partie ( 27 ) haute pression d'une turbine ( 3 ) à vapeur.

3. Générateur ( 8 ) de vapeur à récupération de la chaleur perdue suivant la revendication 1 ou 2, dans lequel le séparateur ( 45 ) est un séparateur à force proportionnelle à la masse.

4. Générateur ( 8 ) de vapeur à récupération de la chaleur perdue suivant l'une des revendications précédentes, dans lequel la surface ( 44 ) de chauffe peut être, du côté secondaire, alimentée en eau.

5. Générateur ( 8 ) de vapeur à récupération de la chaleur perdue suivant l'une des revendications précédentes, dans lequel la surface ( 44 ) de chauffe peut, du côté secondaire, être alimentée en eau provenant d'un préchauffeur d'eau d'alimentation.

6. Générateur ( 8 ) de vapeur à récupération de la chaleur perdue suivant la revendication 5, dans lequel le préchauffeur d'eau d'alimentation est un préchauffeur ( 19 ) d'alimentation de haute pression.

7. Générateur ( 8 ) de vapeur à récupération de la chaleur perdue suivant l'une des revendications précédentes, dans lequel la surface ( 44 ) de chauffe est une surface de chauffe d'évaporateur à passage continu.

8. Générateur ( 8 ) de vapeur à récupération de la chaleur perdue suivant l'une des revendications 1 à 3, dans lequel la surface de chauffe communique du côté secondaire, du côté de l'entrée, avec un présurchauffeur ( 16 ) de haute pression.

9. Générateur ( 8 ) de vapeur à récupération de la chaleur perdue suivant l'une des revendications 1 à 3, dans lequel la surface de chauffe communique du côté secondaire, du côté de l'entrée, avec un surchauffeur ( 17 ) intermédiaire.

10. générateur ( 8 ) de vapeur à récupération de la chaleur perdue suivant l'une des revendications précédentes, dans lequel le premier surchauffeur est un surchauffeur ( 15 ) de haute pression.

11. Générateur ( 8 ) de vapeur à récupération de la chaleur perdue suivant l'une des revendications précédentes, comprenant en outre une dérivation ( 39 ) de vapeur sous haute pression pour contourner le surchauffeur ( 15 ) de haute pression.

12. générateur ( 8 ) de vapeur à récupération de la chaleur perdue suivant l'une des revendications précédentes, comprenant en outre une dérivation ( 40 ) pour de la vapeur de surchauffeur intermédiaire pour contourner un surchauffeur ( 17 ) intermédiaire.

13. Générateur ( 8 ) de vapeur à récupération de la chaleur perdue suivant l'une des revendications précédentes, dans lequel un collecteur ( 47 ) d'entrée pour la surface ( 44 ) de chauffe est un collecteur d'entrée tube dans tube.

14. Centrale ( 1 ) à turbine à gaz à cycle combiné comprenant une turbine ( 2 ) à gaz, une turbine ( 3 ) à vapeur et un générateur ( 8 ) de vapeur à récupération de la chaleur perdue suivant l'une des revendications précédentes.

15. Procédé pour faire fonctionner un générateur ( 8 ) de vapeur à récupération de la chaleur perdue comprenant un premier surchauffeur ( 15, 17 ) dans le sens du courant des gaz perdus en refroidissant un gaz chaud avant qu'il arrive au premier surchauffeur ( 15 ), **caractérisé en ce que** l'on sépare, dans un séparateur à cyclone à surfaces de séparation, de l'eau non évaporée, lors du refroidissement des gaz perdus.

16. procédé suivant la revendication 15, dans lequel on refroidit les gaz perdus par de l'eau d'alimentation chaude sous haute pression.

17. procédé suivant la revendication 15, dans lequel on refroidit les gaz perdus par de la vapeur de présurchauffeur.

18. procédé suivant l'une des revendications 15 à 17, dans lequel on mélange de la vapeur créée au refroidissement des gaz perdus à de la vapeur sous haute pression.
